# EUROPEAN PATENT APPLICATION

(11) **EP 4 686 144 A1**
(43) Date of publication of application: **28.01.2026**
(21) Application number: 24774561.5
(22) Date of filing: 21.02.2024
(51) Int. Cl.: H04L 9/14, G06F 21/34, H04L 9/32

(54) **INTEGRATED CIRCUIT CARD AND METHOD FOR CONTROLLING INTEGRATED CIRCUIT CARD**

(30) Priority: 23.03.2023 JP 2023046502
(71) Applicant: Toppan Holdings Inc., Tokyo 110-0016 (JP)
(72) Inventor: IWAI, Yuki, Tokyo 110-0016 (JP); OISHI, Hiroshi, Tokyo 110-0016 (JP); YURA, Akiyuki, Tokyo 110-0016 (JP)
(74) Representative: Hoffmann Eitle
(86) International application number: PCT/JP2024/006241
(87) International publication number: WO 2024/195416

(57) **Abstract**

The present invention is an IC card (2) including: a receiving unit (20) that receives first information specifying first authentication using quantum-resistant cryptography or second information specifying second authentication using cryptography other than the quantum-resistant cryptography; a first authentication unit (210) that performs the first authentication; a second authentication unit (211) that performs the second authentication; a third authentication unit (212) that performs third authentication; a function execution unit (213) that executes a prescribed function; and a function control unit (214) that permits execution of the prescribed function.

## Description

### [Technical Field]

The present invention relates to an IC card and a method of controlling an IC card. The present application is based on and claims the benefit of priority from Japanese Patent Application No. 2023-046502 filed in Japan on March 23, 2023, the contents of which are incorporated herein by reference.

### [Background Art]

IC (Integrated Circuit) cards used for credit cards, cash cards, prepaid cards, or personal identification cards are widespread. Common IC cards perform authentication processing using an encryption method such as RSA, DES (Data Encryption Standard), AES (Advanced Encryption Standard), and Elliptic Curve Cryptography (ECC). If a quantum computer is realized, cryptography used in these encryption methods may be broken.

Quantum-resistant cryptography (post-quantum cryptography: PQC) in which decipherment is difficult even by a quantum computer has appeared. For example, PTL 1 discloses a system using lattice cryptography which is a type of quantum-resistant cryptography.

### [Citation List]

### [Patent Literature]

PTL 1: JP 2020-537450 A

### [Summary of the Invention]

### [Technical Problem]

Since IC cards capable of using quantum-resistant cryptography are not sufficiently widespread, an environment in which such an IC card is usable is limited. Therefore, it is difficult to efficiently operate an IC card capable of using only quantum-resistant cryptography as an encryption method. In an IC card capable of using a common encryption method (existing cryptography) such as RSA, DES, AES, or ECC and quantum-resistant cryptography, existing cryptography is an object of an attack, which may cause occurrence of vulnerabilities.

The present invention has been made in view of the above-described problem and has as an object to provide an IC card and a method of controlling an IC card which can maintain safety by using quantum-resistant cryptography and which can achieve convenience by using existing cryptography.

### [Solution to Problem]

A first aspect of the present invention is an IC card including: a receiving unit that receives first information specifying first authentication using quantum-resistant cryptography or second information specifying second authentication using cryptography other than the quantum-resistant cryptography; a first authentication unit that performs the first authentication in response to the first information being received; a second authentication unit that performs the second authentication in response to the second information being received; a third authentication unit that performs third authentication which is different from both the first authentication and the second authentication in response to the second information being received; a function execution unit that executes a prescribed function; and a function control unit that permits execution of the prescribed function in response to the first authentication being successful and permits execution of the prescribed function in response to the second authentication and the third authentication being successful.

A second aspect of the present invention is the IC card of the first aspect in which the prescribed function includes a function regarding the quantum-resistant cryptography.

A third aspect of the present invention is an IC card including: a receiving unit that receives first information specifying first authentication using quantum-resistant cryptography or second information specifying second authentication using cryptography other than the quantum-resistant cryptography; a first authentication unit that performs the first authentication in response to the first information being received; a second authentication unit that performs the second authentication in response to the second information being received; a function execution unit that executes a first function and a second function differing from each other; and a function control unit that permits execution of the first function in response to the first authentication being successful, and limits execution of the first function and permits execution of the second function in response to the second authentication being successful.

A fourth aspect of the present invention is the IC card of the third aspect, in which in response to the first authentication being successful, the function control unit permits execution of the second function.

A fifth aspect of the present invention is the IC card of the fourth aspect in which the second function includes a function regarding the cryptography other than the quantum-resistant cryptography.

A sixth aspect of the present invention is the IC card of the third aspect or the fourth aspect, in which the first function includes a function regarding the quantum-resistant cryptography.

A seventh aspect of the present invention is a method of controlling an IC card including: a receiving step in which a receiving unit of an IC card receives first information specifying first authentication using quantum-resistant cryptography or second information specifying second authentication using cryptography other than the quantum-resistant cryptography; a first authentication step in which a first authentication unit of the IC card performs the first authentication in response to the first information being received; a second authentication step in which a second authentication unit of the IC card performs the second authentication in response to the second information being received; a third authentication step in which a third authentication unit of the IC card performs a third authentication which is different from both the first authentication and the second authentication in response to the second information being received; and a function control step in which a function control unit of the IC card permits execution of a prescribed function in response to the first authentication being successful, and the function control unit permits execution of the prescribed function in response to the second authentication and the third authentication being successful.

An eighth aspect of the present invention is a method of controlling an IC card including: a receiving step in which a receiving unit of an IC card receives first information specifying first authentication using quantum-resistant cryptography or second information specifying second authentication using cryptography other than the quantum-resistant cryptography; a first authentication step in which a first authentication unit of the IC card performs the first authentication in response to the first information being received; a second authentication step in which a second authentication unit of the IC card performs the second authentication in response to the second information being received; and a function control step in which a function control unit of the IC card permits execution of a first function in response to the first authentication being successful, and the function control unit limits execution of the first function and permits execution of a second function which is different from the first function in response to the second authentication being successful.

### [Advantageous Effects of the Invention]

According to the present invention, the IC card and the method of controlling an IC card can maintain safety of the IC card by using quantum-resistant cryptography and also can achieve convenience of the IC card by using existing cryptography.

### [Brief Description of the Drawings]

Fig. 1 is a block diagram illustrating an example of the configuration of a control device and an IC card according to a first embodiment of the present invention.
Fig. 2 is a flowchart illustrating an example of the action of the control device according to the first embodiment of the present invention.
Fig. 3 is a diagram illustrating an example of the configuration of an authentication command in the first embodiment of the present invention.
Fig. 4 is a flowchart illustrating an example of actions performed by the IC card according to the first embodiment of the present invention.
Fig. 5 is a flowchart illustrating an example of actions performed by the control device according to the first embodiment of the present invention.
Fig. 6 is a flowchart illustrating an example of actions performed by the IC card according to the first embodiment of the present invention.
Fig. 7 is a flowchart illustrating an example of actions performed by the control device according to the first embodiment of the present invention.
Fig. 8 is a diagram illustrating an example of the configuration of an unlocking command in the first embodiment of the present invention.
Fig. 9 is a flowchart illustrating an example of actions performed by the IC card according to the first embodiment of the present invention.
Fig. 10 is a flowchart illustrating an example of actions performed by the control device according to the first embodiment of the present invention.
Fig. 11 is a diagram illustrating an example of the configuration of a production information acquisition command in the first embodiment of the present invention.
Fig. 12 is a flowchart illustrating an example of actions performed by the IC card according to the first embodiment of the present invention.
Fig. 13 is a flowchart illustrating an example of actions performed by an IC card according to a second embodiment of the present invention.
Fig. 14 is a flowchart illustrating an example of actions performed by the IC card according to the second embodiment of the present invention.
Fig. 15 is a flowchart illustrating an example of actions performed by the IC card according to the second embodiment of the present invention.
Fig. 16 is a flowchart illustrating an example of actions performed by the IC card according to the second embodiment of the present invention.

### [Description of the Embodiments]

Embodiments of the present invention will be described below with reference to the drawings.

### (First embodiment)

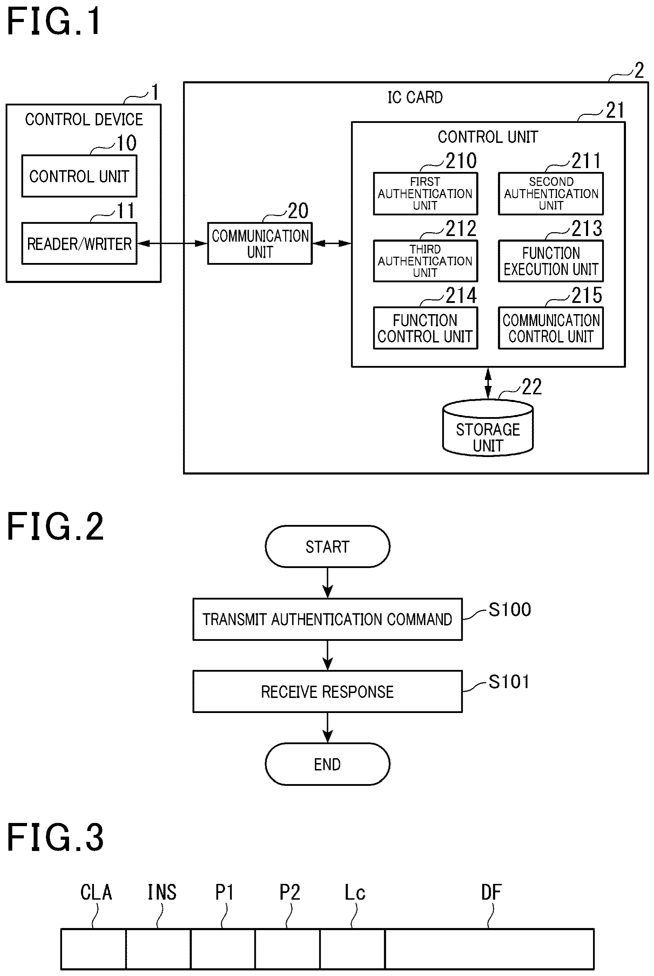

A first embodiment of the present invention will be described. Fig. 1 is a diagram illustrating a configuration example of a control device 1 and an IC card 2 according to the first embodiment.

The control device 1 may be included in a security gate system, an ATM (Automatic Teller Machine) system, a credit card transaction system, or the like and controls the system. The control device 1 includes a control unit 10 and a reader/writer 11.

The control unit 10 performs various processing for controlling the entirety of the control device 1. Further, the control unit 10 controls communication performed by the reader/writer 11 with the IC card 2. The reader/writer 11 has a communication circuit and performs communication with the IC card 2.

The IC card 2 is a contact-type or contactless-type card storage medium. The IC card 2 includes a communication unit 20, a control unit 21, and a storage unit 22.

The communication unit 20 has a communication circuit and performs communication with the reader/writer 11 of the control device 1. If the IC card 2 is a contact-type IC card, the communication unit 20 performs communication with the reader/writer 11 in a state in which the IC card 2 is inserted into the slot of the reader/writer 11. If the IC card 2 is a contactless-type IC card, the communication unit 20 performs communication with the reader/writer 11 by using near field communication (NFC) or the like.

The control unit 21 includes a first authentication unit 210, a second authentication unit 211, a third authentication unit 212, a function execution unit 213, a function control unit 214, and a communication control unit 215.

The first authentication unit 210 performs first authentication using quantum-resistant cryptography. The second authentication unit 211 performs second authentication using existing cryptography other than quantum-resistant cryptography (i.e., cryptography other than quantum-resistant cryptography in existing cryptography or cryptography different from quantum-resistant cryptography). For example, the second authentication unit 211 may perform the second authentication by using RSA, DES, AES, ECC, or the like. The third authentication unit 212 performs third authentication which is different from both the first authentication and the second authentication.

The third authentication unit 212 may perform the third authentication without using cryptography. The third authentication unit 212 may perform the third authentication by using information related to a user possessing the IC card 2. For example, the third authentication unit 212 may perform biometric authentication or password authentication.

The function execution unit 213 executes a prescribed function. The prescribed function includes updating of a cryptographic key. The function control unit 214 controls execution of the prescribed function.

At least one of the first authentication unit 210, the second authentication unit 211, the third authentication unit 212, the function execution unit 213, the function control unit 214, and the communication control unit 215 may be achieved by a processor such as a CPU (Central Processing Unit) executing a program stored in a computer-readable storage medium. At least one of the first authentication unit 210, the second authentication unit 211, the third authentication unit 212, the function execution unit 213, the function control unit 214, and the communication control unit 215 may be achieved by hardware (a circuit) such as an ASIC (Application Specific Integrated Circuit) or an FPGA (Field-Programmable Gate Array). At least one of the first authentication unit 210, the second authentication unit 211, the third authentication unit 212, the function execution unit 213, the function control unit 214, and the communication control unit 215 may be achieved by a combination of software and hardware.

The computer-readable storage medium is a storage unit such as a portable medium, e.g., a flexible disk, a magneto-optical disk, a ROM, or a CD-ROM, or a hard disk incorporated in a computer system. The above-described program may be a difference file (difference program). At least one function of the first authentication unit 210, the second authentication unit 211, the third authentication unit 212, the function execution unit 213, the function control unit 214, and the communication control unit 215 may be achieved by a combination of the program already stored in a computer and the difference program.

The storage unit 22 stores information previously stored in the IC card 2, information generated by the control unit 21, and information received from the control device 1. For example, the storage unit 22 may be a flash memory or an EEPROM (Electrically Erasable Programmable Read-Only Memory). The storage unit 22 may be a combination of these storage medium.

Using Fig. 2 to Fig. 12, actions performed by the control device 1 and the IC card 2 will be described. Fig. 2 is a flowchart illustrating an example of actions performed by the control device 1 when the control device 1 requests authentication by the IC card 2 before allowing the IC card 2 to execute the prescribed function.

### (Step S100)

The control unit 10 generates an authentication command indicating an authentication request and outputs the authentication command to the reader/writer 11. The authentication command includes cryptography type information indicating the type of cryptography. The type of cryptography is quantum-resistant cryptography or existing cryptography. The control unit 10 controls the reader/writer 11 to transmit the authentication command to the IC card 2.

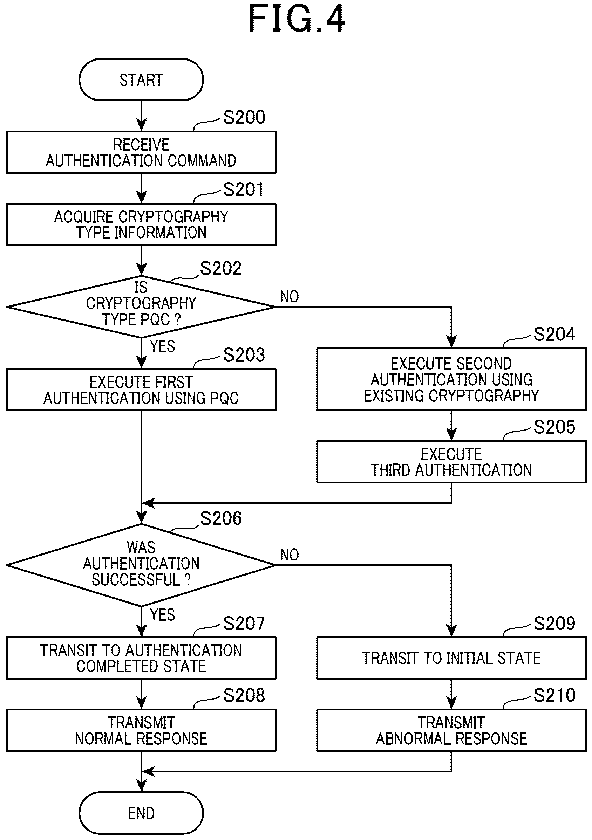

The IC card 2 receives the authentication command transmitted in step S100 and performs later-described processing illustrated in Fig. 4. The IC card 2 transmits a response to the control device 1.

### (Step S101)

The control unit 10 controls the reader/writer 11 to receive the response transmitted from the IC card 2. The reader/writer 11 outputs the received response to the control unit 10.

Fig. 3 is a diagram illustrating the configuration of the authentication command. The authentication command conforms to the APDU (Application Protocol Data Unit) format. The authentication command includes parameter CLA, parameter INS, parameter P1, parameter P2, parameter Lc, and data field DF.

Parameter CLA is called a class byte. Parameter INS is called a command byte and includes an instruction code corresponding to the authentication command. Parameter P1 and parameter P2 contain a parameter specified in the authentication command. Parameter Lc indicates the length of data field DF. Data field DF includes data used for authentication.

Parameter P1 contains the cryptography type information. Specifically, parameter P1 contains one of 0 x 00, 0 x 01, and 0 x 02. 0 x 00 indicates DES as existing cryptography. 0 x 01 indicates AES as existing cryptography. 0 x 02 indicates quantum-resistant cryptography.

For example, there is a case in which a function regarding quantum-resistant cryptography is mounted on the control device 1, and a function regarding existing cryptography is not mounted on the control device 1. In such a case, the authentication command contains parameter P1 indicating quantum-resistant cryptography. Alternatively, there is a case in which the function regarding existing cryptography is mounted on the control device 1, and the function regarding quantum-resistant cryptography is not mounted on the control device 1. In such a case, the authentication command contains parameter P1 indicating existing cryptography. Alternatively, there is a case in which the function regarding quantum-resistant cryptography and the function regarding existing cryptography are mounted on the control device 1. In such a case, the authentication command contains parameter P1 indicating quantum-resistant cryptography or existing cryptography.

Fig. 4 is a flowchart illustrating an example of the action of the IC card 2 in response to the control device 1 requesting authentication to the IC card 2.

### (Step S200)

The communication control unit 215 controls the communication unit 20 to receive the authentication command transmitted from the control device 1. The communication unit 20 outputs the authentication command to the control unit 21.

### (Step S201)

The function control unit 214 refers to parameter P1 of the authentication command and acquires the cryptography type information contained in parameter P1.

### (Step S202)

The function control unit 214 determines whether or not the cryptography type indicated by the cryptography type information is quantum-resistant cryptography.

### (Step S203)

When the cryptography type is quantum-resistant cryptography, the first authentication unit 210 performs the first authentication using quantum-resistant cryptography. The first authentication unit 210 performs the first authentication by using data contained in data field DF of the authentication command.

### (Step S204)

When the cryptography type is existing cryptography, the second authentication unit 211 performs the second authentication using existing cryptography. The second authentication unit 211 performs the second authentication by using data contained in data field DF of the authentication command.

### (Step S205)

After the second authentication unit 211 performs the second authentication, the third authentication unit 212 performs the third authentication. The third authentication unit 212 executes the third authentication by using data included in data field DF of the authentication command.

The order of step S204 and step S205 is not limited to the order illustrated in Fig. 4. After the third authentication unit 212 performs the third authentication, the second authentication unit 211 may perform the second authentication.

### (Step S206)

After the first authentication unit 210 performs the first authentication, or after the third authentication unit 212 performs the third authentication, the function control unit 214 determines whether the authentication was successful. When the first authentication unit 210 performs the first authentication, the function control unit 214 determines whether the first authentication was successful. When the second authentication unit 211 performs the second authentication, and the third authentication unit 212 performs the third authentication, the function control unit 214 determines whether the second authentication and the third authentication were successful.

### (Step S207)

If the first authentication is successful, or if the second authentication and the third authentication are successful, the state of the IC card 2 transitions to an authentication completed state. For example, the function control unit 214 sets a flag indicating the authentication completed state in the storage unit 22.

### (Step S208)

After the state of the IC card 2 transitions to the authentication completed state, the communication control unit 215 generates a normal response and outputs the normal response to the communication unit 20. The communication control unit 215 controls the communication unit 20 to transmit the normal response to the control device 1.

### (Step S209)

If the first authentication fails or if at least one of the second authentication and the third authentication fails, the state of the IC card 2 transitions to an initial state. For example, the function control unit 214 sets a flag indicating the initial state in the storage unit 22.

### (Step S210)

After the state of the IC card 2 transitions to the initial state, the communication control unit 215 generates an abnormal response and outputs the abnormal response to the communication unit 20. The communication control unit 215 controls the communication unit 20 to transmit the abnormal response to the control device 1.

If the second authentication in step S204 fails, step S206 may be executed without executing the third authentication in step S205.

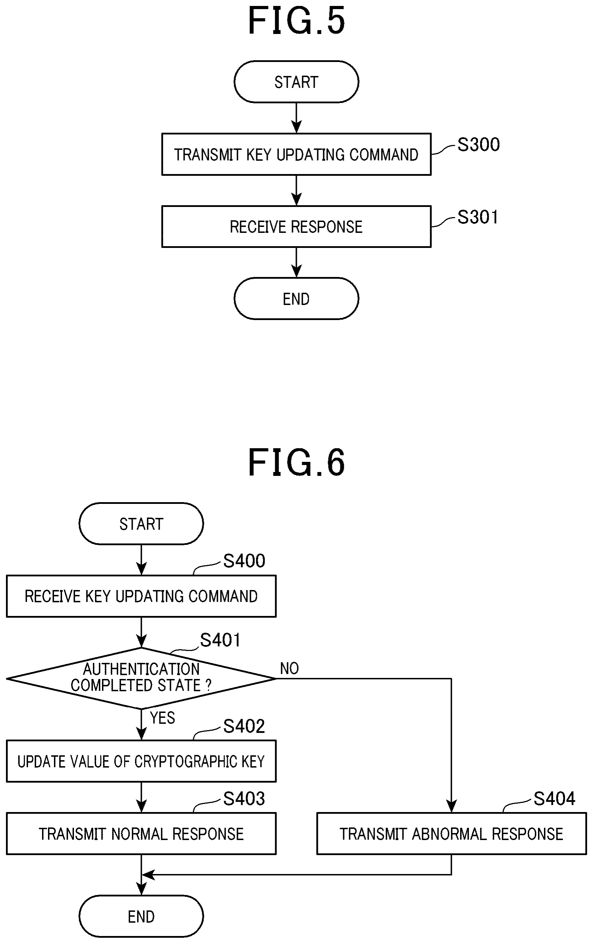

Fig. 5 is a flowchart illustrating a first example of actions performed by the control device 1 when the control device 1 allows the IC card 2 to execute the prescribed function. An example in which the prescribed function is updating of a cryptographic key will be described below.

For example, the control device 1 performs processing illustrated in Fig. 5 in order to update an initial value of a cryptographic key initially set in the IC card 2. Alternatively, after it has been found that the cryptographic key stored in the IC card 2 leaked, the control device 1 performs processing illustrated in Fig. 5 in order to update the cryptographic key. In response to the normal response being received in step S101 illustrated in Fig. 2, the control device 1 performs the following processing.

### (Step S300)

The control unit 10 generates a key updating command indicating a request to update the cryptographic key and outputs the key updating command to the reader/writer 11. The control unit 10 controls the reader/writer 11 to transmit the key updating command to the IC card 2.

The IC card 2 receives the key updating command transmitted in step S300 and performs later-described processing illustrated in Fig. 6. The IC card 2 transmits a response to the control device 1.

### (Step S301)

The control unit 10 controls the reader/writer 11 to receive the response transmitted from the IC card 2. The reader/writer 11 outputs the received response to the control unit 10.

The configuration of the key updating command is the same as the configuration of the authentication command illustrated in Fig. 3. A portion of the key updating command which is different from the authentication command will be described.

Parameter P1 contains information indicating the type of cryptographic key to be updated. Specifically, parameter P1 contains one of 0 x 00, 0 x 01, and 0 x 02. 0 x 00 indicates a DES cryptographic key as existing cryptography. 0 x 01 indicates an AES cryptographic key as existing cryptography. 0 x 02 indicates a cryptographic key of quantum-resistant cryptography. Data field DF includes the value of a new cryptographic key.

For example, there is a case in which a function regarding quantum-resistant cryptography is mounted on the control device 1, and a function regarding existing cryptography is not mounted on the control device 1. In such a case, the key updating command includes a parameter P1 indicating the cryptographic key of quantum-resistant cryptography. Alternatively, there is a case in which the function regarding existing cryptography is mounted on the control device 1, and the function regarding quantum-resistant cryptography is not mounted on the control device 1. In such a case, the key updating command includes a parameter P1 indicating the cryptographic key of existing cryptography. Alternatively, there is a case in which the function regarding quantum-resistant cryptography and the function regarding existing cryptography are mounted on the control device 1. In such a case, the authentication command includes a parameter P1 indicating the cryptographic key of quantum-resistant cryptography or existing cryptography.

Fig. 6 is a flowchart illustrating an example of actions performed by the IC card 2 in response to the control device 1 requesting updating of a cryptographic key by the IC card 2.

### (Step S400)

The communication control unit 215 controls the communication unit 20 to receive the key updating command transmitted from the control device 1. The communication unit 20 outputs the key updating command to the control unit 21.

### (Step S401)

The function control unit 214 determines, based on the flag set in the storage unit 22, whether the state of the IC card 2 is the authentication completed state.

### (Step S402)

If the state of the IC card 2 is the authentication completed state, the function control unit 214 permits updating of a cryptographic key. The function execution unit 213 reads data field DF of the key updating command and acquires the value of the cryptographic key included in data field DF. The function execution unit 213 updates the value of the cryptographic key included in the storage unit 22 with the value acquired from the key updating command.

If parameter P1 includes 0 x 02, the function control unit 214 permits updating of a cryptographic key of quantum-resistant cryptography, and the function execution unit 213 updates the cryptographic key of quantum-resistant cryptography.

If parameter P1 includes 0 x 00 or 0 x 01, the function control unit 214 permits updating of a cryptographic key of existing cryptography, and the function execution unit 213 updates the cryptographic key of existing cryptography. If parameter P1 includes 0 x 00, the function execution unit 213 updates the DES cryptographic key. If parameter P1 includes 0 x 01, the function execution unit 213 updates the AES cryptographic key.

### (Step S403)

After the function execution unit 213 updates the cryptographic key, the communication control unit 215 generates a normal response and outputs the normal response to the communication unit 20. The communication control unit 215 controls the communication unit 20 to transmit the normal response to the control device 1.

### (Step S404)

If the state of the IC card 2 is the initial state, the function control unit 214 does not permit updating of a cryptographic key. In this case, the function execution unit 213 does not update the cryptographic key. The communication control unit 215 generates an abnormal response and outputs the abnormal response to the communication unit 20. The communication control unit 215 controls the communication unit 20 to transmit the abnormal response to the control device 1.

In the above-described example, the function control unit 214 permits updating of a cryptographic key if the first authentication using quantum-resistant cryptography is successful. Further, the function control unit 214 also permits updating of a cryptographic key if both the second authentication using existing cryptography and the third authentication are successful.

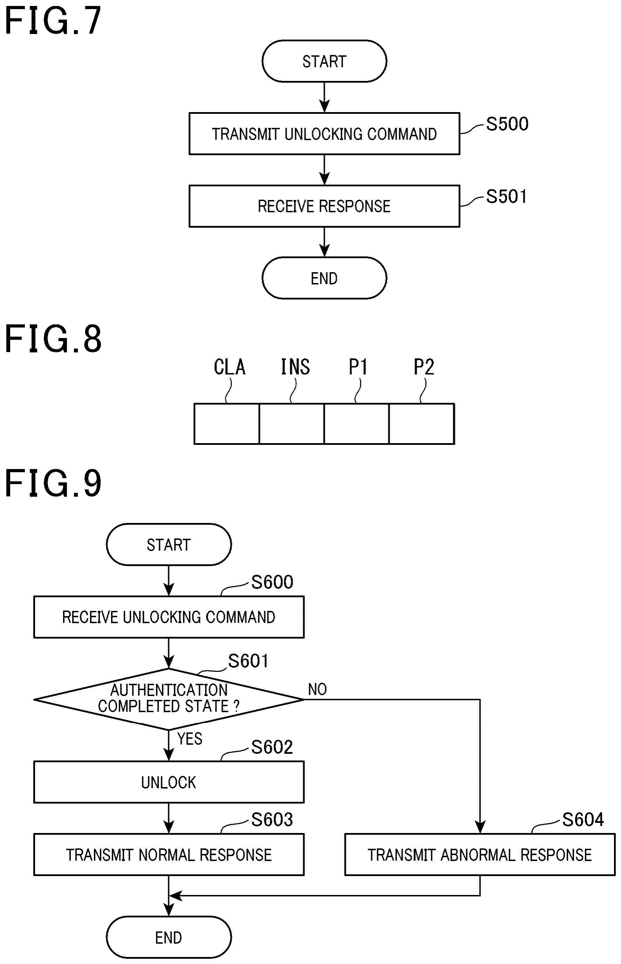

Fig. 7 is a flowchart illustrating a second example of actions performed by the control device 1 when the control device 1 allows the IC card 2 to execute the prescribed function. An example in which the prescribed function is unlocking of the IC card 2 will be described below.

Like a common IC card, the IC card 2 has the function of detecting an external attack such as an attack in which power having an unauthorized level is supplied or an attack in which an unauthorized PIN (Personal Identification Number) code is inputted a certain number of times. In response to such an attack being detected, the IC card 2 locks the IC card 2 in order to prevent unauthorized use of the IC card 2, such that execution of major functions is disabled. The control device 1 performs processing illustrated in Fig. 7 in order to unlock the IC card 2. In response to the normal response being received in step S101 illustrated in Fig. 2, the control device 1 performs the following processing.

### (Step S500)

The control unit 10 generates an unlocking command indicating a request for unlocking, and outputs the unlocking command to the reader/writer 11. The control unit 10 controls the reader/writer 11 to transmit the unlocking command to the IC card 2.

The IC card 2 receives the unlocking command transmitted in step S500 and performs later-described processing illustrated in Fig. 9. The IC card 2 transmits a response to the control device 1.

### (Step S501)

The control unit 10 controls the reader/writer 11 to receive the response transmitted from the IC card 2. The reader/writer 11 outputs the received response to the control unit 10.

Fig. 8 is a diagram illustrating an example of the configuration of the unlocking command. The unlocking command conforms to the APDU format. The unlocking command includes parameter CLA, parameter INS, parameter P1, and parameter A portion of the unlocking command which is different from the authentication command will be described.

Parameter INS contains an instruction code corresponding to the unlocking command. Unlike in the authentication command, parameter P1 does not include cryptography type information.

Fig. 9 is a flowchart illustrating an example of actions performed by the IC card 2 in response to the control device 1 requesting unlocking of the IC card 2.

### (Step S600)

The communication control unit 215 controls the communication unit 20 to receive the unlocking command transmitted from the control device 1. The communication unit 20 outputs the unlocking command to the control unit 21.

### (Step S601)

The function control unit 214 determines, based on the flag set to the storage unit 22, whether or not the state of the IC card 2 is in the authentication completed state.

### (Step S602)

If the state of the IC card 2 is the authentication completed state, the function control unit 214 permits unlocking. The function execution unit 213 unlocks the IC card 2.

### (Step S603)

After the function execution unit 213 unlocks the IC card 2, the communication control unit 215 generates a normal response and outputs the normal response to the communication unit 20. The communication control unit 215 controls the communication unit 20 to transmit the normal response to the control device 1.

### (Step S604)

If the state of the IC card 2 is the initial state, the function control unit 214 does not permit unlocking. In this case, the function execution unit 213 does not unlock the IC card 2. The communication control unit 215 generates an abnormal response and outputs the abnormal response to the communication unit 20. The communication control unit 215 controls the communication unit 20 to transmit the abnormal response to the control device 1.

In the above-described example, the function control unit 214 permits unlocking if the first authentication using quantum-resistant cryptography is successful. Further, the function control unit 214 also permits unlocking if both the second authentication using existing cryptography and the third authentication are successful.

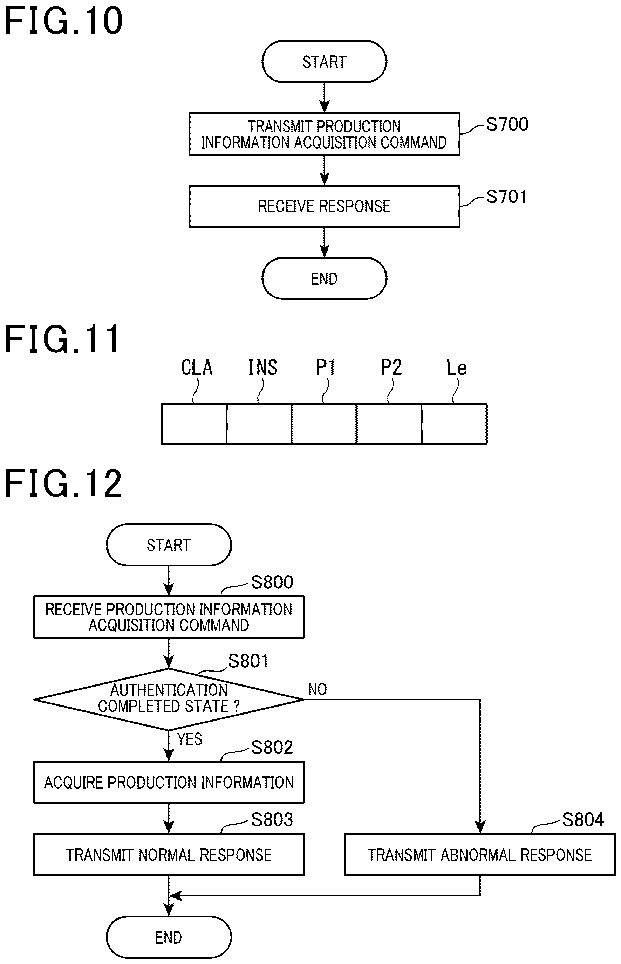

Fig. 10 is a flowchart illustrating a third example of actions performed by the control device 1 when the control device 1 allows the IC card 2 to execute the prescribed function. An example in which the prescribed function is acquisition of production information will be described below.

For example, the production information may be the production date of the IC card 2, the serial number of the IC card 2, the lot number of the IC card 2, or the like. For example, the control device 1 may be disposed in a factory in which the IC card 2 is produced, and the control device 1 may perform processing illustrated in Fig. 10 in order to manage the production process. Alternatively, after the IC card 2 becomes commercially available, the control device 1 may perform processing illustrated in Fig. 10 in order to confirm a time at which the IC card 2 was produced or the lot of the IC card 2. In response to the normal response being received in step S101 illustrated in Fig. 2, the control device 1 executes the following processing.

### (Step S700)

The control unit 10 generates a production information acquisition command indicating a request for acquisition of production information and outputs the production information acquisition command to the reader/writer 11. The control unit 10 controls the reader/writer 11 to transmit the production information acquisition command to the IC card 2.

The IC card 2 receives the production information acquisition command transmitted in step S700 and performs later-described processing illustrated in Fig. 12. The IC card 2 transmits a response to the control device 1.

### (Step S701)

The control unit 10 controls the reader/writer 11 to receive the response transmitted from the IC card 2. The reader/writer 11 outputs the received response to the control unit 10.

Fig. 11 is a diagram illustrating an example of the configuration of the production information acquisition command. The production information acquisition command conforms to the APDU format. The production information acquisition command contains parameter CLA, parameter INS, parameter P1, parameter P2, and parameter Le. A portion of the production information acquisition command which is different from the authentication command will be described.

Parameter INS contains an instruction code corresponding to the production information acquisition command. Unlike in the authentication command, parameter P1 does not contain the cryptography type information. Parameter Le indicates requesting a data field as a response to the production information acquisition command.

Fig. 12 is a flowchart illustrating an example of actions performed by the IC card 2 in response to the control device 1 requesting acquisition of production information by the IC card 2. The storage unit 22 includes a ROM (Read-Only Memory) in which the production information is stored.

### (Step S800)

The communication control unit 215 controls the communication unit 20 to receive the production information acquisition command transmitted from the control device 1. The communication unit 20 outputs the production information acquisition command to the control unit 21.

### (Step S801)

The function control unit 214 determines, based on the flag set to the storage unit 22, whether or not the state of the IC card 2 is in the authentication completed state.

### (Step S802)

If the state of the IC card 2 is the authentication completed state, the function control unit 214 permits acquisition of production information. The function execution unit 213 acquires the production information from the storage unit 22.

### (Step S803)

After the function execution unit 213 acquires the production information, the communication control unit 215 generates a normal response including the production information and outputs the normal response to the communication unit 20. The communication control unit 215 controls the communication unit 20 to transmit the normal response to the control device 1.

### (Step S804)

If the state of the IC card 2 is the initial state, the function control unit 214 does not permit acquisition of production information. In this case, the function execution unit 213 does not acquire the production information. The communication control unit 215 generates an abnormal response and outputs the abnormal response to the communication unit 20. The communication control unit 215 controls the communication unit 20 to transmit the abnormal response to the control device 1.

In the above-described example, the function control unit 214 permits acquisition of production information if the first authentication using quantum-resistant cryptography is successful. Further, the function control unit 214 also permits acquisition of production information if both the second authentication using existing cryptography and the third authentication are successful.

As described above, the communication unit 20 (receiving unit) receives first information specifying first authentication using quantum-resistant cryptography or second information specifying second authentication using cryptography other than quantum-resistant cryptography. In the above-described example, the first information and the second information are the cryptography type information. In response to the first information being received, the first authentication unit 210 performs the first authentication. In response to the second information being received, the second authentication unit 211 performs the second authentication. In response to the second information being received, the third authentication unit 212 performs third authentication which is different from both the first authentication and the second authentication. The function execution unit 213 executes the prescribed function. If the first authentication is successful, the function control unit 214 permits execution of the prescribed function. If the second authentication and the third authentication are successful, the function control unit 214 permits execution of the prescribed function. For example, the prescribed function may be updating of a cryptographic key, unlocking of the IC card 2, or acquisition of production information.

The prescribed function contains the function regarding quantum-resistant cryptography. In this case, the prescribed function is updating of a cryptographic key.

If the first authentication using highly safe quantum-resistant cryptography is successful, the function control unit 214 permits execution of the prescribed function. Therefore, the IC card 2 can maintain safety of the IC card 2.

If only the second authentication which can be an object of an attack but has high convenience is successful, the function control unit 214 does not permit execution of the prescribed function. If both the second authentication and the third authentication are successful, the function control unit 214 permits execution of the prescribed function. Therefore, the IC card 2 can achieve convenience of the IC card 2 using existing cryptography.

### (Second embodiment)

A second embodiment of the present invention will be described. An IC card 2 according to the second embodiment does not need to have the third authentication unit 212. In the second embodiment, the function control unit 214 permits execution of the prescribed function if the first authentication using quantum-resistant cryptography is successful, like in the first embodiment. In the second embodiment, the function control unit 214 limits execution of the prescribed function if the second authentication is successful. The function control unit 214 permits execution of only a part of the function provided in the IC card 2.

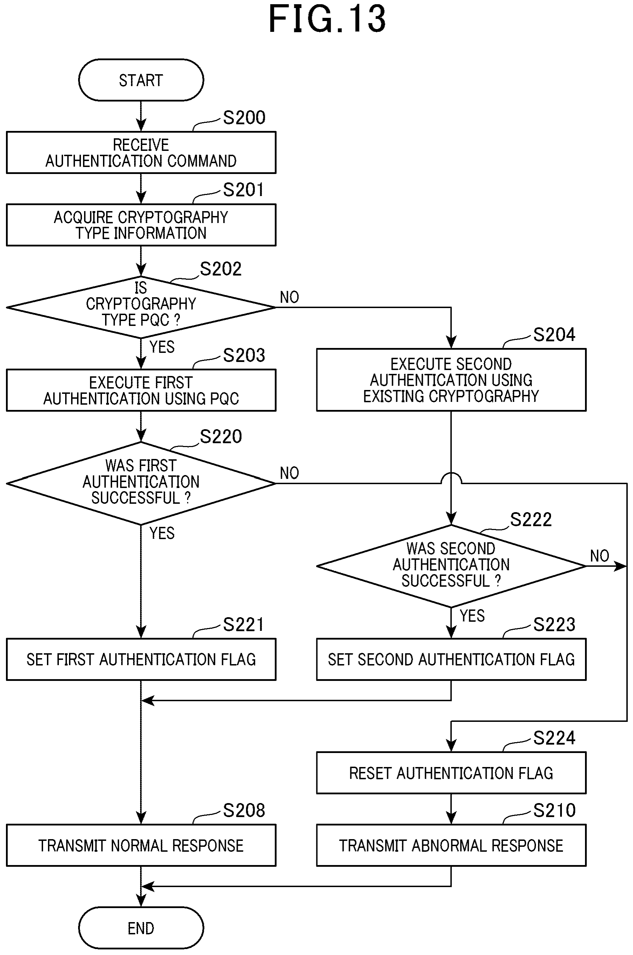

Fig. 13 is a flowchart illustrating an example of actions performed by the IC card 2 in response to the control device 1 requesting authentication by the IC card 2. Description of the same processing as the processing illustrated in Fig. 4 will be omitted.

### (Step S220)

After the first authentication unit 210 performs the first authentication, the function control unit 214 determines whether the first authentication was successful.

### (Step S221)

If the first authentication is successful, the function control unit 214 sets a first authentication flag in the storage unit 22. The first authentication flag indicates that the first authentication was successful.

### (Step S222)

After the second authentication unit 211 performs the second authentication, the function control unit 214 determines whether the second authentication was successful.

### (Step S223)

If the second authentication is successful, the function control unit 214 sets a second authentication flag in the storage unit 22. The second authentication flag indicates that the second authentication was successful.

After step S221 or step S223 is executed, step S208 is executed.

### (Step S224)

If the first authentication or the second authentication fails, the function control unit 214 resets the authentication flag without setting both the first authentication flag and the second authentication flag in the storage unit 22. After step S224 is executed, step S210 is executed.

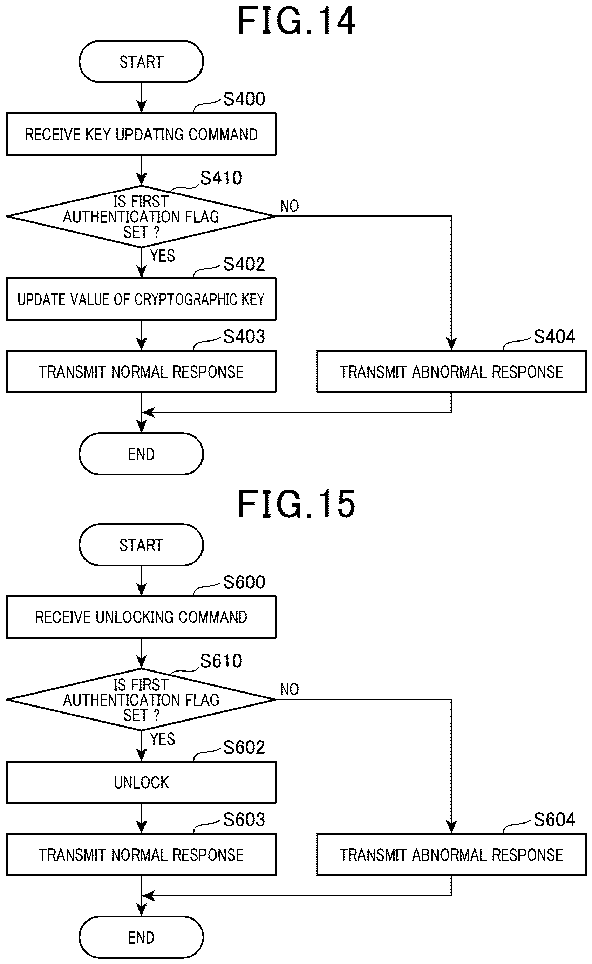

Fig. 14 is a flowchart illustrating an example of actions performed by the IC card 2 in response to the control device 1 requesting updating of a cryptographic key by the IC card 2. Description of the same processing as the processing illustrated in Fig. 6 will be omitted.

### (Step S410)

After the communication unit 20 receives the key updating command in step S400, the function control unit 214 determines whether the first authentication flag is set in the storage unit 22.

If the first authentication flag is set in the storage unit 22, the function control unit 214 permits updating of a cryptographic key. In step S402, the function execution unit 213 updates the cryptographic key stored in the storage unit 22. If the second authentication flag is set in the storage unit 22 or if the first authentication flag is not set in the storage unit 22, the function control unit 214 does not permit updating of a cryptographic key. In this case, the function execution unit 213 does not update the cryptographic key. In step S404, the communication control unit 215 generates an abnormal response and outputs the abnormal response to the communication unit 20. The communication control unit 215 controls the communication unit 20 to transmit the abnormal response to the control device 1.

In the above-described example, the function control unit 214 permits updating of a cryptographic key when the first authentication using quantum-resistant cryptography was successful. On the other hand, if the second authentication using existing cryptography is successful, the function control unit 214 does not permit updating of a cryptographic key.

Fig. 15 is a flowchart illustrating an example of actions performed by the IC card 2 in response to the control device 1 requesting unlocking of the IC card 2. Description of the same processing as the processing illustrated in Fig. 9 will be omitted.

### (Step S610)

After the communication unit 20 receives the unlocking command in step S600, the function control unit 214 determines whether the first authentication flag is set in the storage unit 22.

If the first authentication flag is set in the storage unit 22, the function control unit 214 permits unlocking. In step S602, the function execution unit 213 unlocks the IC card 2. If the second authentication flag is set in the storage unit 22 or if the first authentication flag is not set in the storage unit 22, the function control unit 214 does not permit unlocking. In this case, the function execution unit 213 does not unlock the IC card 2. In step S604, the communication control unit 215 generates an abnormal response and outputs the abnormal response to the communication unit 20. The communication control unit 215 controls the communication unit 20 to transmit the abnormal response to the control device 1.

In the above-described example, the function control unit 214 permits unlocking when the first authentication using quantum-resistant cryptography was successful. On the other hand, if the second authentication using existing cryptography is successful, the function control unit 214 does not permit unlocking.

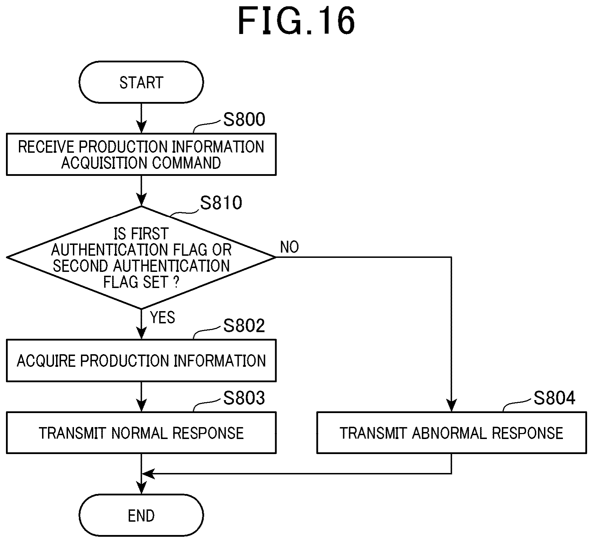

Fig. 16 is a flowchart illustrating an example of actions performed by the IC card 2 in response to the control device 1 requesting acquisition of production information by the IC card 2. Description of the same processing as the processing illustrated in Fig. 12 will be omitted.

### (Step S810)

After the communication unit 20 receives the production information acquisition command in step S800, the function control unit 214 determines whether the first authentication flag or the second authentication flag is set in the storage unit 22.

If the first authentication flag or the second authentication flag is set in the storage unit 22, the function control unit 214 permits acquisition of production information. In step S802, the function execution unit 213 acquires the production information from the storage unit 22. If the first and second authentication flags are not set in the storage unit 22, the function control unit 214 does not permit acquisition of production information. In this case, the function execution unit 213 does not acquire the production information from the storage unit 22. In step S804, the communication control unit 215 generates an abnormal response and outputs the abnormal response to the communication unit 20. The communication control unit 215 controls the communication unit 20 to transmit the abnormal response to the control device 1.

In the above-described example, the function control unit 214 permits acquisition of production information when the first authentication using quantum-resistant cryptography was successful. Further, the function control unit 214 also permits acquisition of production information if the second authentication using existing cryptography is successful.

As described above, the function execution unit 213 executes the first function and the second function which are different from each other. If the first authentication is successful, the function control unit 214 permits execution of the first function. If the second authentication is successful, the function control unit 214 limits execution of the first function and permits execution of the second function. For example, the first function may be updating of a cryptographic key or unlocking. For example, the second function is acquisition of production information.

If the first authentication is successful, the function control unit 214 permits execution of the second function. The second function may include a function regarding cryptography other than quantum-resistant cryptography. In this case, the second function is acquisition of production information.

The first function may include a function regarding quantum-resistant cryptography. In this case, the first function is updating of a cryptographic key.

If the first authentication using highly safe quantum-resistant cryptography is successful, the function control unit 214 permits execution of the prescribed function. Therefore, the IC card 2 can maintain safety of the IC card 2.

If only the second authentication which can be an object of an attack but has high convenience is successful, the function control unit 214 limits execution of the prescribed function and permits execution of only a part of the function. Therefore, the IC card 2 can achieve convenience of the IC card 2 using existing cryptography.

The embodiments of the present invention have been described in detail above with reference to the drawings. However, a specific configuration should not be limited to the above-described embodiments, but should include design changes or the like within the scope not departing from the spirit of the present invention.

### [Industrial Applicability]

According to the present invention, the IC card and the method of controlling an IC card can maintain safety of the IC card by using quantum-resistant cryptography and also can achieve convenience of the IC card by using existing cryptography.

### [Reference Signs List]

- 1: Control device
- 2: IC card
- 10, 21: Control unit
- 11: Reader/writer
- 20: Communication unit
- 22: Storage unit
- 210: First authentication unit
- 211: Second authentication unit
- 212: Third authentication unit
- 213: Function execution unit
- 214: Function control unit
- 215: Communication control unit

## Claims

1. An IC card comprising:
a receiving unit that receives first information specifying first authentication using quantum-resistant cryptography or second information specifying second authentication using cryptography other than the quantum-resistant cryptography;
a first authentication unit that performs the first authentication in response to the first information being received;
a second authentication unit that performs the second authentication in response to the second information being received;
a third authentication unit that performs third authentication which is different from both the first authentication and the second authentication in response to the second information being received;
a function execution unit that executes a prescribed function; and
a function control unit that permits execution of the prescribed function in response to the first authentication being successful and permits execution of the prescribed function in response to the second authentication and the third authentication being successful.

2. The IC card according to claim 1,
wherein the prescribed function contains a function regarding the quantum-resistant cryptography.

3. An IC card comprising:
a receiving unit that receives first information specifying first authentication using quantum-resistant cryptography or second information specifying second authentication using cryptography other than the quantum-resistant cryptography;
a first authentication unit that performs the first authentication in response to the first information being received;
a second authentication unit that performs the second authentication in response to the second information being received;
a function execution unit that executes a first function and a second function differing from each other; and
a function control unit that permits execution of the first function in response to the first authentication being successful, and limits execution of the first function and permits execution of the second function in response to the second authentication being successful.

4. The IC card according to claim 3,
wherein in response to the first authentication being successful, the function control unit permits execution of the second function.

5. The IC card according to claim 4,
wherein the second function includes a function regarding the cryptography other than the quantum-resistant cryptography.

6. The IC card according to claim 3 or claim 4,
wherein the first function includes a function regarding the quantum-resistant cryptography.

7. A method of controlling an IC card comprising:
a receiving step in which a receiving unit of an IC card receives first information specifying first authentication using quantum-resistant cryptography or second information specifying second authentication using cryptography other than the quantum-resistant cryptography;
a first authentication step in which a first authentication unit of the IC card performs the first authentication in response to the first information being received;
a second authentication step in which a second authentication unit of the IC card performs the second authentication in response to the second information being received;
a third authentication step in which a third authentication unit of the IC card performs third authentication which is different from both the first authentication and the second authentication in response to the second information being received; and
a function control step in which a function control unit of the IC card permits execution of a prescribed function in response to the first authentication being successful, and the function control unit permits execution of the prescribed function in response to the second authentication and the third authentication being successful.

8. A method of controlling an IC card comprising:
a receiving step in which a receiving unit of an IC card receives first information specifying first authentication using quantum-resistant cryptography or second information specifying second authentication using cryptography other than the quantum-resistant cryptography;
a first authentication step in which a first authentication unit of the IC card performs the first authentication in response to the first information being received;
a second authentication step in which a second authentication unit of the IC card performs the second authentication in response to the second information being received; and
a function control step in which a function control unit of the IC card permits execution of a first function in response to the first authentication being successful, and the function control unit limits execution of the first function and permits execution of a second function which is different from the first function in response to the second authentication being successful.
